(19) Europäisches Patentamt
European Patent Office
Office européen des brevets

(11) **EP 2 465 162 B1**

(12) **EUROPÄISCHE PATENTSCHRIFT**

(45) Veröffentlichungstag und Bekanntmachung des Hinweises auf die Patenterteilung:
**15.03.2017 Patentblatt 2017/11**

(51) Int Cl.:
***H01M 10/48*** *(2006.01)*

(21) Anmeldenummer: **10730370.3**

(22) Anmeldetag: **30.06.2010**

(86) Internationale Anmeldenummer:
**PCT/EP2010/003968**

(87) Internationale Veröffentlichungsnummer:
**WO 2011/018130 (17.02.2011 Gazette 2011/07)**

(54) **BESTIMMUNG EINER ZELLKERNTEMPERATUR EINES ENERGIESPEICHERS**

DETERMINATION OF A CORE CELL TEMPERATURE OF AN ENERGY STORE

DÉTERMINATION D'UNE TEMPÉRATURE DE NOYAU DE CELLULE D'UN ACCUMULATEUR D'ÉNERGIE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **11.08.2009 DE 102009037088**

(43) Veröffentlichungstag der Anmeldung:
**20.06.2012 Patentblatt 2012/25**

(73) Patentinhaber: **Bayerische Motoren Werke Aktiengesellschaft**
**80809 München (DE)**

(72) Erfinder:
• **MEIJERING, Alexander**
**80807 München (DE)**
• **FLAHAUT, Nicolas**
**81547 München (DE)**

(56) Entgegenhaltungen:
EP-A2- 1 026 769        DE-A1- 10 346 706
DE-A1-102005 041 746        DE-A1-102008 050 536

• **CHEN Y ET AL: "Thermal analysis of lithium polymer electrolyte batteries by a two dimensional model-thermal behaviour and design optimization" ELECTROCHIMICA ACTA, ELSEVIER SCIENCE PUBLISHERS, BARKING, GB LNKD- DOI:10.1016/0013-4686(94)80095-2, Bd. 39, Nr. 4, 1. März 1994 (1994-03-01), Seiten 517-526, XP026577831 ISSN: 0013-4686 [gefunden am 1994-03-01]**

**Beschreibung**

Die Erfindung betrifft ein Verfahren zur Bestimmung einer Zellkerntemperatur eines Energiespeichers sowie eine entsprechende Vorrichtung. Weiterhin wird ein Fahrzeug mit einer solchen Vorrichtung vorgeschlagen.

Ein zellenbasierter Energiespeicher (z.B. ein Hochleistungs-Energiespeicher oder ein Hochenergie-Speicher) wie er z.B. in Hybrid-Fahrzeugen eingesetzt wird, erzeugt sowohl beim Laden als auch bei Entladen Abwärme. Um eine möglichst hohe Lebensdauer des Energiespeichers zu gewährleisten, soll die maximale Temperatur der jeweiligen Zelle (die häufig im Zellkern auftritt) eine vorgegebene Grenztemperatur (z.B. in Höhe von 40°C bis 50°C) während des Betriebs nicht überschreiten. Somit ist es erforderlich, die Zellen des Energiespeichers aktiv zu kühlen.

Die abzuführende Wärme der Zelle wird im Wesentlichen durch das Verhalten des Hybridfahrzeugs (Beschleunigen, Verzögern, Rekuperieren, usw.) beeinflusst. Der zeitliche Verlauf eines solchen Verhaltens ist kaum vorhersehbar. So unterliegt die von dem Energiespeicher geforderte elektrische Leistung und damit die in der Zelle erzeugte Abwärme starken zeitlichen Schwankungen.

Zur Überprüfung der aktuellen Zelltemperatur können einige Zellen des Energiespeichers z.B. an der Zellwand oder an dem jeweiligen Zellpol mit Temperatursensoren versehen werden. Diese Temperatursensoren können über eine Elektronik ausgelesen und ausgewertet werden. Allerdings liefert eine derartige Temperaturmessung nur mangelhaft Aufschluss über die eigentliche Temperatur innerhalb der jeweiligen Zelle, also über die tatsächlich auftretende maximale Zelltemperatur.

Die Kühlung der Zelle erfolgt über deren Zellwand oder Zellpol. Beispielsweise beträgt bei einer handelsüblichen zylindrischen Zelle für eine Abwärme in Höhe von 10W eine Temperaturdifferenz zwischen dem Zellkern und der Zellwand in etwa 13K. Zwischen dem Zellkern und dem Zellpol beträgt die Temperaturdifferenz in etwa 5K.

Um eine lange Lebensdauer des Energiespeichers zu garantieren und um die einzelnen Zellen sowie das Kühlsystem energetisch effizient nutzen zu können, sind genaue Kenntnisse über die Zellkerntemperatur von wesentlicher Bedeutung. Aufgrund des Aufbaus des Energiespeichers bzw. der Zellen kann jedoch die Zellkerntemperatur nicht direkt gemessen werden.

Die einzelne Zelle kann mittels einer Wandkühlung Wärme abführen, die Wandtemperatur der Zelle ist jedoch nicht konstant und unterliegt zeitlichen Schwankungen. Durch die thermische Trägheit der Zelle (aufgrund ihrer hohen Wärmekapazität) und die ständig variierende Wärmeerzeugung in der Zelle lässt sich anhand der momentanen Wandtemperatur nicht ausreichend genau auf die Zellkerntemperatur rückschließen.

Die Problematik der hohen Temperaturdifferenzen zwischen Zellwand bzw. Zellpol und Zellkern ist bei zylindrischen Zellen besonders ausgeprägt. Jedoch sind auch andere Geometrien, z.B. prismatische oder Pouch-Geometrien, besonders bei dickeren Ausführungen der Zellen ähnlich problematisch.

DE 10 2008 050 536 A1 betrifft eine temperaturkontrollierte in-situ Gasdruckmessung für elektrochemische Systeme. Dabei werden ein Zellinnendruck und eine Zellinnentemperatur bestimmt und durch Kompensation temperaturbedingter Druckschwankungen in der Zelle mit Hilfe eines entsprechend korrigierten Zelleninnendrucks eine Aussage über das Gasungsverhalten der Zelle getroffen. Ein Temperatursensor dient zur Messung der individuellen Zelltemperatur.

CHEN Y. ET AL: "Thermal analysis of lithium polymer electrolyte batteries by a two dimensional model-thermal behaviour and design optimization" ELECTROCHIMICA ACTA, ELSEVIER SCIENCE PUBLISHERS, BARKING, GB, Bd. 39, Nr. 4, 1. März 1994, Seiten 517-526, betrifft eine Beziehung zwischen thermischem Verhalten und Design einer Batterie. Einflüsse von Kühlung und Stapelgrößen werden untersucht. Temperaturverteilungen innerhalb von Zellstapeln werden für verschiedene Zelldesigns berechnet. Mittels mathematischer Simulationen eines Wärmetransports wird der Effekt von Designparametern mit Blick auf Isolierung, Dicke von Zellkomponenten und verschiedenen Kollektormaterialien hinsichtlich einer Temperaturverteilung betrachtet.

Die **Aufgabe** der Erfindung besteht darin, die vorstehend genannten Nachteile zu vermeiden und insbesondere eine Möglichkeit für eine optimierte Betriebsstrategie eines Energiespeichers anzugeben.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird ein Verfahren zur Bestimmung einer Zellkerntemperatur eines Energiespeichers vorgeschlagen, wobei der Energiespeicher mindestens eine Zelle umfasst,

- bei dem eine Temperatur der Zelle gemessen wird;
- bei dem eine volumetrische Wärme bestimmt wird;
- bei dem die Zellkerntemperatur ermittelt wird basierend auf einer Geometrie der Zelle.

Somit kann die Zellkerntemperatur mit einer hohen Genauigkeit bestimmt werden. Dabei können unterschiedliche Zellen mit verschiedenen Geometrien berücksichtigt werden, z.B. im Wesentlichen zylindrische Zellen, prismatische Zellen oder Zellen mit Pouch-Geometrien.

Insbesondere können mehrere Temperaturen gemessen werden. Erfindungsgemäß wird die Temperatur der Zelle über einen Zellpol der Zelle und/oder eine Zellwand der Zelle gemessen.

Auch kann die Zellkerntemperatur ermittelt werden basierend auf Materialeigenschaften der Zelle.

Durch den hier vorgeschlagenen Ansatz ist es möglich, die Temperatur in dem Zellkern, also im Inneren der Zelle mit hoher Genauigkeit zu bestimmen bzw. vorherzusagen und somit z.B. eine Kühlung der Zelle derart auszulegen, dass die Zelle eine vorgegebene Maximaltemperatur nicht überschreitet, jedoch gleichzeitig ein hohes Leistungspotential der Zelle ausgeschöpft wird.

Auch ist es von Vorteil, dass durch die verbesserte Bestimmung der Zellkerntemperatur des Energiespeichers (insbesondere des Hochvolt-Energiespeichers) eine optimierte und bedarfsgerechte Betriebsstrategie zur Kühlung des Energiespeichers ermöglicht wird. Dadurch kann erreicht werden, dass eine Kühlung nur insoweit erfolgt als diese auch benötigt wird und eine größtenteils unnötige und energetisch nachteilige Kühlung vermieden wird.

Erfindungsgemäß wird der Energiespeicher gekühlt abhängig von der ermittelten Zellkerntemperatur des Energiespeichers, wobei der Energiespeicher oder die Zelle über die Zellwand und/oder über mindestens einen Zellpol gekühlt wird.

Die Kühlung kann insofern an verschiedenen von außen zugänglichen Stellen der Zelle bzw. des Energiespeichers ansetzen. Insbesondere kann die Kühlung über einen bestehenden Kühlkreislauf, z.B. eine Klimaanlage eines Kraftfahrzeugs erfolgen bzw. an diese gekoppelt sein.

Erfindungsgemäß wird die Temperatur an einem Zellpol der Zelle und/oder an einer Zellwand der Zelle gemessen. Vorzugsweise können hierzu Sensoren genutzt werden, die bereits an der Zelle vorhanden sind.

Insbesondere ist es eine Weiterbildung, dass der Energiespeicher ein Hochleistungsenergiespeicher oder ein Hoch-Energiespeicher ist und insbesondere mehrere Zellen umfasst.

Beispielsweise können die mehreren Zellen des Energiespeichers mit einer hohen Packungsdichte angeordnet sein. Auch ist es möglich, dass Zwischenräume zwischen den Zellen zur Kühlung genutzt werden.

Erfindungsgemäß wird die volumetrische Wärme in Abhängigkeit von einem Innenwiderstand der Zelle, einem gemessenen Strom und einem Volumen der Zelle ermittelt.

Ferner ist es eine Weiterbildung, dass die volumetrische Wärme q ermittelt wird gemäß folgender Beziehung

$$q = R_i I^2 / V,$$

wobei

R$_i$    einen Innenwiderstand,

I    einen gemessenen Strom,

V    ein Volumen der Zelle

bezeichnen.

Im Rahmen einer zusätzlichen Weiterbildung wird die Zellkerntemperatur basierend auf einer zeitabhängigen volumetrischen Wärme bestimmt.

Erfindungsgemäß wird die Zellkerntemperatur in einem Frequenzraum ermittelt.

Hierzu wird beispielsweise eine Laplace-Transformation der Signale im kontinuierlichen Zeitbereich durchgeführt. Dies kann beispielsweise über eine Abtastung erfolgen. Die Bestimmung der Zellkerntemperatur bzw. eines Zellkerntemperaturverlaufs umfassend eine Vielzahl aufeinanderfolgender diskreter Zellkerntemperaturen kann dann im Spektralbereich (Frequenzbereich) erfolgen. Dies hat den Vorteil, dass die Berechnungen, z.B. Filterungen, im Frequenzbereich ohne großen Aufwand durchführbar sind und somit vorteilhaft Steuergeräte mit geringer Komplexität ausreichen, um die Zellkerntemperatur zu bestimmen.

Eine Ausgestaltung ist es, dass die Zellkerntemperatur in dem Frequenzraum anhand der folgenden Beziehung ermittelt wird:

$$T_{\text{Kern}}(s) = \frac{k}{\tau \cdot s + 1} \cdot q(s) + \frac{1}{\tau \cdot s + 1} \cdot T_{\text{mess}}(s),$$

wobei

s    eine Frequenz,

$\tau$    eine charakteristische Zeit,

k einen Wärmewiderstand,

q die volumetrische Wärme,

$T_\text{Kern}$ die Zellkerntemperatur,

$T_\text{mess}$ eine Temperatur an der Position der Messung

bezeichnen.

Im Wesentlichen lassen sich die Parameter $\tau$ und k durch bekannte Materialeigenschaften und Zelldimensionen auch theoretisch bestimmen.

Die vorstehende Beziehung gilt insbesondere für im Wesentlichen zylindrisch ausgestaltete Zellen.

Die vorstehend genannte Aufgabe wird auch gelöst durch eine Vorrichtung zur Bestimmung der Zellkerntemperatur einer Zelle eines Energiespeichers, wobei die Vorrichtung eine Verarbeitungseinheit aufweist, die derart eingerichtet ist, dass das Verfahren gemäß einem der vorstehenden Ansprüche durchführbar ist.

Die Verarbeitungseinheit kann z.B. eine analoge oder digitale Verarbeitungseinheit sein, sie kann als ein Prozessor und/oder eine zumindest teilweise festverdrahtete Schaltungsanordnung ausgeführt sein, die derart eingerichtet ist, dass das Verfahren wie hierin beschrieben durchführbar ist.

Besagte Prozessoreinheit kann jede Art von Prozessor oder Rechner oder Computer mit entsprechend notwendiger Peripherie (Speicher, Input/Output-Schnittstellen, Ein-Ausgabe-Geräte, etc.) sein oder umfassen. Weiterhin kann eine festverdrahtete Schaltungseinheit, z.B. ein FPGA oder ein ASIC oder eine sonstige integrierte Schaltung, vorgesehen sein.

Eine Ausgestaltung ist es, dass eine Kühlung vorgesehen ist, anhand derer über eine Zellwand und/oder über mindestens einen Zellpol der Zelle der Energiespeicher bzw. die betroffene Zelle kühlbar ist.

Auch ist es eine Ausgestaltung, dass der Energiespeicher ein Energiespeicher eines Fahrzeugs, insbesondere eines Hybridfahrzeugs oder eines sogenannten Elektrofahrzeugs ist.

Eine Weiterbildung besteht darin, dass die Zelle des Energiespeichers eine im Wesentlichen zylindrische Geometrie, eine im Wesentlichen prismatische Geometrie oder im Wesentlichen eine Pouch-Geometrie aufweist.

Die vorstehend genannte Aufgabe wird auch gelöst durch ein Fahrzeug, insbesondere ein Hybridfahrzeug oder ein Elektrofahrzeug, mit einer Vorrichtung wie hierin beschrieben.

Ausführungsbeispiele der Erfindung werden nachfolgend anhand der Zeichnungen dargestellt und erläutert.

Es zeigen:

Fig.1 ein schematisches Blockschaltbild zur Temperaturregelung eines zellenbasierten Energiespeichers, wobei die Zellentemperatur des Energiespeichers anhand einer gemessenen Wandtemperatur und einer Leistungsabgabe des Energiespeichers ermittelt wird;

Fig.2 eine schematische Implementierung der hier vorgestellten Lösung, wobei eine Übertragungsfunktion als Eingangssignal eine erfasste Wärme und Wand- bzw. Poltemperatur erhält und als Ergebnis eine aktuelle Zellkerntemperatur zu einem diskreten Zeitpunkt n bereitstellt.

Es wird ein Ansatz vorgestellt, der die Bestimmung einer Zellkerntemperatur eines Energiespeichers mit einer hohen Genauigkeit mittels einfach zu erfassender Größen ermöglicht. Oftmals sind Sensoren für die Erfassung dieser Größen bereits in dem Energiespeicher vorhanden.

Bei dem Energiespeicher handelt es sich insbesondere um einen Hochleistungs-Energiespeicher bzw. Hoch-Energiespeicher.

Weiterhin hat der vorgeschlagene Ansatz den Vorteil, dass er ressourcenschonend auf einem Steuergerät implementiert werden kann und keine hohen Anforderungen an externe Speicher und/oder Rechenleistung stellt.

Eine allgemeine mehrdimensionale Wärmegleichung lautet

$$\rho \cdot C_p \cdot \frac{\partial T}{\partial t} = \vec{\nabla} \cdot \left( \lambda \cdot \vec{\nabla}(T) \right) + q(t) \qquad (1),$$

wobei

$\rho$ eine Materialdichte,

$C_p$ eine Wärmekapazität,

T eine Temperatur,

$\lambda$ eine Wärmeleitfähigkeit,

q(t) eine zeitlich abhängige volumetrische Wärme,

$\vec{\nabla}$       einen Nabla-Operator

bezeichnen.

Gleichung (1) kann in zylindrischen Koordinaten wie folgt wiedergegeben werden:

$$\rho \cdot C_p \cdot \frac{\partial T}{\partial t} = \frac{1}{r}\frac{\partial}{\partial r}\left(r\lambda\frac{\partial T}{\partial r}\right) + \frac{1}{r^2}\frac{\partial}{\partial \theta}\left(\lambda\frac{\partial T}{\partial \theta}\right) + \frac{\partial}{\partial z}\left(\lambda\frac{\partial T}{\partial z}\right) + q(t) \qquad (2).$$

Unter Berücksichtigung der radialen Komponente ergibt sich aus Gleichung (2):

$$\rho \cdot C_p \cdot \frac{\partial T}{\partial t} = \lambda \cdot \frac{1}{r}\frac{\partial}{\partial r}\left(r\frac{\partial T}{\partial r}\right) + q(t) \qquad (3).$$

Für zylindrische Zellen ergibt sich aus der Gleichung (3) im zylindrischen Koordinatensystem folgender Zusammenhang in Frequenzraum:

$$T_{\text{Kern}}(s) = \frac{k}{\tau \cdot s + 1} \cdot q(s) + \frac{1}{\tau \cdot s + 1} \cdot T_{\text{mess}}(s) \qquad (4)$$

mit

$$s = i \cdot 2\pi \cdot f$$

und

$$q = R_i I^2 / V$$

wobei

f         eine Frequenz,
$\tau$         eine charakteristische Zeit,
k         einen Wärmewiderstand in $(m^3 K)/W$,
q         eine volumetrische Wärme in $W/m^3$,
T         eine Temperatur,
$R_i$         einen Innenwiderstand,
I         einen gemessenen Strom,
$T_{\text{Kern}}$     eine Temperatur an der Position: Kern,
$T_{\text{mess}}$     eine Temperatur an der Position der Messung,
V         ein Volumen der Zelle

bezeichnen.

Die Temperatur kann an unterschiedlichen Stellen gemessen werden. Beispielsweise kann die Temperatur der Zellenwand ($T_{\text{mess}}$ = $T_{\text{wand}}$) oder die Temperatur des Pols der Zelle ($T_{\text{mess}}$ = $T_{\text{pol}}$) gemessen und gemäß Gleichung (4) entsprechend berücksichtigt werden.

Es wird ein zeitabhängiger Strom I(t) erfasst und daraus werden (bei bekanntem Innenwiderstand $R_i$ und bekanntem Volumen V) die zeitabhängige Wärme q(t) sowie die zeitabhängige Temperatur T(t) bestimmt.

Gemäß der aus der Signalverarbeitung bekannten Umformung können mittels einer Laplace-Transformation Abhängigkeiten dieser Größen von der Frequenz in einem Frequenzraum bestimmt werden. Mit der oben beschriebenen Beziehung lässt sich die Kerntemperatur im Frequenzraum $T_{\text{Kern}}(s)$ bestimmen. Durch eine Rücktransformation in den Zeitbereich erhält man die Kerntemperatur in Abhängigkeit von der Zeit $T_{\text{Kern}}(t)$

Die Kerntemperatur ergibt sich als eine Superposition des Einflusses der schwankenden Eigenerwärmung

$$\frac{k}{\tau \cdot s + 1} \cdot q(s).$$

Sofern die Wandtemperatur gemessen wird ($T_{mess} = T_{Wand}$), stellt der Term

$$\frac{1}{\tau \cdot s + 1} \cdot T_{\text{Wand}}(s)$$

den Einfluss der sich ändernden Wandtemperatur dar.

Diese Einflüsse können auch unabhängig voneinander betrachtet werden, um beispielsweise bei konstanter Wandtemperatur den Einfluss der zeitlich schwankenden Eigenerwärmung auf die Zellkerntemperatur zu bestimmen.

Der Term

$$\frac{1}{\tau \cdot s + 1}$$

stellt ein Tiefpassfilter für die Übertragung der Einflüsse der Wärmequelle q und der gemessenen Temperatur ($T_{Wand}$ oder $T_{Pol}$) auf die Kerntemperatur ($T_{Kern}$) dar.

Aus bekannten Materialgrößen (Materialdichte p, Wärmeleitfähigkeit der Zelle λ, Wärmekapazität Cp) und geometrischen Größen (Zellradius r) lässt sich der hier vorgeschlagenen Ansatz auf Zellen unterschiedlicher Geometrie anwenden und ist damit durch eine entsprechende Parametrisierung universell einsetzbar.

Beispielhaft können eine charakteristische Zeit sowie ein Wärmewiderstand für zylindrische Zellen bei gemessener Wandtemperatur wie folgt analytisch bestimmt werden:

$$T_{\text{Kern}}(s) = \frac{k_{\text{Wand}}}{\tau_{\text{Wand}} \cdot s + 1} \cdot q(s) + \frac{1}{\tau_{\text{Wand}} \cdot s + 1} \cdot T_{\text{Wand}}(s) \tag{5},$$

mit

$$\tau = \rho \cdot C_p \cdot k$$

und

$$k = \frac{r^2}{4\lambda}$$

wobei

$\tau$      eine charakteristische Zeit in s,
k      einen Wärmewiderstand in $(m^3 K)/W$,
ρ      eine Materialdichte in $kg/m^3$,
$C_p$      eine Wärmekapazität in J/(kg K),
r      einen Zellradius in m,
λ      eine Wärmeleitfähigkeit in W/(m K)

bezeichnen.

Sofern die Poltemperatur anstatt der Wandtemperatur gemessen wird, sind sowohl die charakteristische Zeit als auch der Wärmewiderstand den Zelleigenschaften anzupassen.

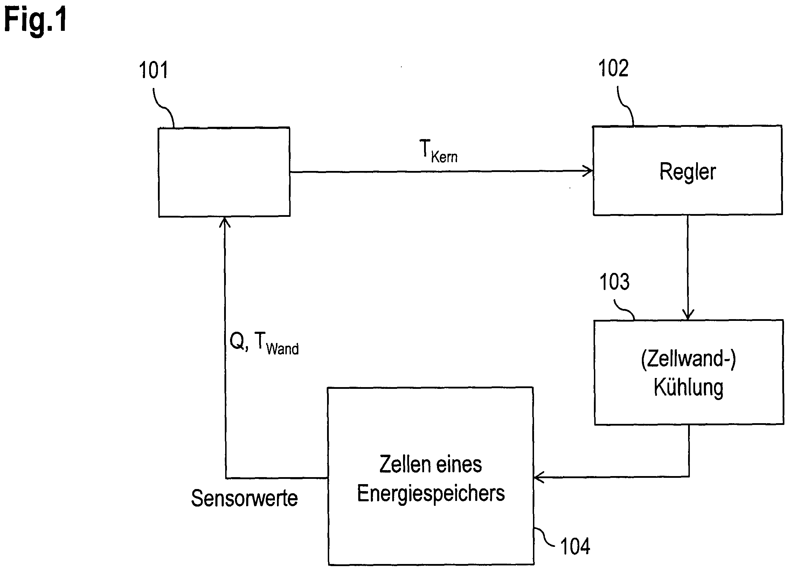

**Fig.1** zeigt ein schematisches Blockschaltbild zur Temperaturregelung eines zellenbasierten Energiespeichers 104, wobei die Zellentemperatur des Energiespeichers anhand einer gemessenen Wandtemperatur $T_{Wand}$ und einer Leistungsabgabe Q des Energiespeichers 104 ermittelt wird.

Die gemessenen Sensorwerte $T_{Wand}$, Q werden einer Verarbeitungseinheit 101 zugeführt, die eine Bestimmung der Zellkerntemperatur $T_{Kern}$ gemäß dem hier vorgeschlagenen Ansatz durchführt und einem Regler 102 bereitstellt. Der Regler 102 vergleicht die Zellkerntemperatur $T_{Kern}$ mit einem zulässigen Temperaturbereich und steuert entsprechend eine Kühlung 103, insbesondere eine Zellwandkühlung, an. Insbesondere kann der Regler 102 bei Annäherung an einen vorgegebenen maximalen Temperaturwert bzw. bei Überschreiten eines vorgegebenen Schwellwerts für die Zellkerntemperatur die Kühlung 103 derart ansteuern, dass der Energiespeicher 104 stärker gekühlt wird. Entsprechend beeinflusst die Kühlung 103 die Temperatur des Energiespeichers 104, insbesondere der Zellen des Energiespeichers 104.

Die in Fig.1 beispielhaft gezeigte Verarbeitungseinheit 101 kann auch Teil des Reglers 102 sein.

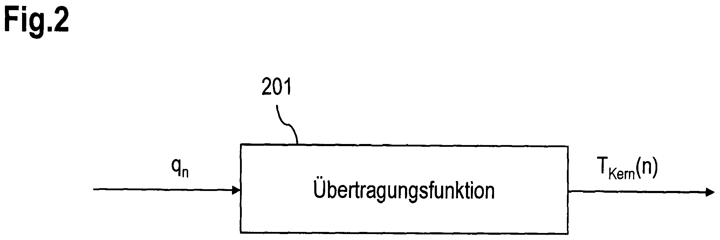

**Fig.2** zeigt eine schematische Implementierung der hier vorgestellten Lösung. Eine Übertragungsfunktion 201 erhält als Eingangssignale eine erfasste Wärme $q_n$ und die Wand- bzw. Poltemperatur $T_{Wand/Pol}(n)$ und liefert eine aktuelle Zellkerntemperatur $T_{Kern}(n)$ zu einem diskreten Zeitpunkt n.

Die Übertragungsfunktion kann wie folgt modelliert werden:

$$T_{\mathrm{Kern}}(n) = (k \cdot q_n - T_{\mathrm{Kern}}(n-1)) \cdot \frac{\tau_s}{\tau} + T_{\mathrm{Kern}}(n-1) \qquad (6),$$

wobei

$\tau_s$     eine Erfassungsrate,
q     eine erfasste Wärme,
n     einen Erfassungszeitpunkt (diskret)

bezeichnen.

Insbesondere steht der Term $T_{Kern}(n-1)$ für den zuletzt abgespeicherten Wert der Kerntemperatur. Durch die Abfolge vieler Erfassungszeitpunkte n ergibt sich der Temperaturverlauf $T_{Kern}(n)$.

Hierbei ist es von Vorteil, dass diese Implementierung nur geringe Anforderungen an die bereitzustellenden Ressourcen stellt und insbesondere auf einem Steuergerät in einem Fahrzeug realisiert werden kann.

Somit ist es möglich, eine Betriebsstrategie so auszulegen als wäre die Zellkerntemperatur bekannt. Die Kühlung der Zellen kann somit erheblich genauer erfolgen als dies bei einer unbekannten oder weitgehend unbekannten Zellkerntemperatur möglich wäre. Weiterhin verhindert die energetisch optimierte Kühlung, dass die Zellen ihre Grenztemperaturen erreichen. Dies wirkt sich vorteilhaft auf die Lebensdauer der Zellen aus.

Ein weiterer Vorteil ergibt sich bei einer dauerhaften Kühlung und einer schwankenden Leistungsabgabe der Zellen. Da die Zellkerntemperatur mit dem hier vorgeschlagenen Ansatz bekannt ist, kann nun die maximale Leistung aus dem Energiespeicher so lange abgerufen werden bis die Grenztemperatur der Zelle nicht überschritten wird. Daraus ergibt sich die maximal mögliche elektrische Fahrleistung für das Hybrid- oder Elektrofahrzeug ohne Gefährdung der Zelllebensdauer.

**Bezugszeichenliste:**

101     Verarbeitungseinheit
102     Regler
103     Kühlung (der Zellwand des Energiespeichers)
104     Energiespeicher

201     Übertragungsfunktion

**Patentansprüche**

**1.** Verfahren zur Bestimmung einer Zellkerntemperatur eines Energiespeichers, der mindestens.eine Zelle umfasst,

    - bei dem eine Temperatur der Zelle gemessen wird;

- bei dem eine volumetrische Wärme bestimmt wird;
- bei dem die Zellkerntemperatur ermittelt wird basierend auf einer Geometrie der Zelle, bei dem der Energiespeicher gekühlt wird abhängig von der ermittelten Zellkerntemperatur des Energiespeichers,
- bei dem die Temperatur an einem Zellpol der Zelle und/oder an einer Zellwand der Zelle gemessen wird,
- bei dem die volumetrische Wärme in Abhängigkeit von einem Innenwiderstand der Zelle, einem gemessenen Strom und einem Volumen der Zelle ermittelt wird, und
- bei dem die Zellkerntemperatur in einem Frequenzraum ermittelt wird.

2. Verfahren nach Anspruch 1, wobei der Energiespeicher oder die Zelle über die Zellwand und/oder über mindestens einen Zellpol gekühlt wird.

3. Verfahren nach Anspruch 1 oder 2, bei dem der Energiespeicher ein Hochleistungsenergiespeicher oder ein Hoch-Energiespeicher ist.

4. Verfahren nach Anspruch 3, bei dem der Energiespeicher mehrere Zellen umfasst.

5. Verfahren nach einem der vorhergehenden Ansprüche, bei dem die volumetrische Wärme q ermittelt wird gemäß folgender Beziehung

$$q = R_i I^2 / V,$$

wobei

$R_i$ einen Innenwiderstand,
I einen gemessenen Strom,
V ein Volumen der Zelle

bezeichnen.

6. Verfahren nach einem der vorhergehenden Ansprüche, bei dem die Zellkerntemperatur in dem Frequenzraum anhand der folgenden Beziehung ermittelt wird:

$$T_{\text{Kern}}(s) = \frac{k}{\tau \cdot s + 1} \cdot q(s) + \frac{1}{\tau \cdot s + 1} \cdot T_{\text{mess}}(s),$$

wobei

s eine Frequenz,
$\tau$ eine charakteristische Zeit,
k einen Wärmewiderstand,
q die volumetrische Wärme,
$T_{\text{Kern}}$ die Zellkerntemperatur,
$T_{\text{mess}}$ eine Temperatur an der Position der Messung

bezeichnen.

7. Verfahren nach einem der vorhergehenden Ansprüche, bei dem die Zellkerntemperatur zu diskreten Zeitpunkten n wie folgt bestimmt wird:

$$T_{\text{Kern}}(n) = (k \cdot q_n - T_{\text{Kern}}(n-1)) \cdot \frac{\tau_s}{\tau} + T_{\text{Kern}}(n-1),$$

wobei

$\tau_s$ eine Erfassungsrate,
q eine erfasste Wärme,
$T_{Kern}$ die Zellkerntemperatur,
$\tau$ eine charakteristische Zeit,
k einen Wärmewiderstand

bezeichnen.

8. Vorrichtung zur Bestimmung der Zellkerntemperatur einer Zelle eines Energiespeichers, wobei die Vorrichtung eine Verarbeitungseinheit aufweist, die derart eingerichtet ist, dass das Verfahren gemäß einem der vorstehenden Ansprüche durchführbar ist.

9. Vorrichtung nach Anspruch 8, mit einer Kühlung, anhand derer über eine Zellwand und/oder über mindestens einen Zellpol der Zelle der Energiespeicher kühlbar ist.

10. Vorrichtung nach einem der Ansprüche 8 oder 9, bei der der Energiespeicher ein Energiespeicher eines Fahrzeugs ist.

11. Vorrichtung nach Anspruch 10, bei der der Energiespeicher ein Energiespeicher eines Hybrid- oder Elektrofahrzeugs ist.

12. Vorrichtung nach einem der Ansprüche 8 bis 11, bei der die Zelle des Energiespeichers eine zylindrische Geometrie, eine prismatische Geometrie oder eine Pouch-Geometrie aufweist.

13. Fahrzeug mit einer Vorrichtung gemäß einem der Ansprüche 8 bis 12.

**Claims**

1. A method for determining a cell core temperature of an energy store which comprises at least one cell,

   - wherein a temperature of the cell is measured;
   - wherein a volumetric heat is determined;
   - wherein the cell core temperature is established based on a shape of the cell, wherein the energy store is cooled subject to the established cell core temperature of the energy store,
   - wherein the temperature is measured at a cell pole of the cell and/or on a cell wall of the cell,
   - wherein the volumetric heat is established subject to an internal resistance of the cell, to a measured current and to a volume of the cell, and
   - wherein the cell core temperature is established in a frequency domain.

2. A method according to claim 1, wherein the energy store or the cell is cooled via the cell wall and/or via at least one cell pole.

3. A method according to claim 1 or claim 2, wherein the energy store is a heavy duty energy store or a high energy store.

4. A method according to claim 3, wherein the energy store comprises a plurality of cells.

5. A method according to any one of the preceding claims, wherein the volumetric heat q is determined according to the following relationship:

$$q = R_i I^2 / V,$$

wherein

R_1 denotes an internal resistance,
I denotes a measured current,

V denotes a volume of the cell.

6. A method according to any one of the preceding claims, wherein the cell core temperature in the frequency domain is determined based on the following relationship:

$$T_{core}{}^{(S)} = \frac{k}{T \cdot s + 1} \cdot q(s) + \frac{1}{T \cdot s + 1} \cdot T_{measurement}(s),$$

wherein

s denotes a frequency,
t denotes a characteristic time,
k denotes a thermal resistance,
q denotes the volumetric heat,
$T_{core}$ denotes the cell core temperature,
$T_{measurement}$ denotes a temperature in the measurement position.

7. A method according to any one of the preceding claims, wherein the cell core temperature is determined as follows at discrete points in time n:

$$T_{core}(n) = (k \cdot q_n - T_{core}(n-1)) \cdot \frac{Ts}{T} + T_{core}(n-1),$$

wherein

$T_s$ denotes a detection rate,
q denotes a detected heat,
$T_{core}$ denotes the cell core temperature,
t denotes a characteristic time,
k denotes a thermal resistance.

8. A device for determining the cell core temperature of a cell of an energy store, wherein the device has a processing unit which is configured such that the method can be implemented according to any one of the preceding claims.

9. A device according to claim 8, with a cooling means by which the energy store can be cooled via a cell wall and/or via at least one cell pole of the cell.

10. A device according to either claim 8 or claim 9, wherein the energy store is an energy store of a vehicle.

11. A device according to claim 10, wherein the energy store is an energy store of a hybrid vehicle or of an electric vehicle.

12. A device according to any one of claims 8 to 11, wherein the cell of the energy store has a cylindrical shape, a prismatic shape or a pouch shape.

13. A vehicle with a device according to any one of claims 8 to 12.

**Revendications**

1. Procédé permettant de déterminer la température du noyau d'une cellule d'un accumulateur d'énergie comprenant au moins une cellule, selon lequel :

- on mesure la température de la cellule,
- on détermine la quantité de chaleur volumétrique,
- on détecte la température du noyau de la cellule sur le fondement de la géométrie de celle-ci,
- on refroidit l'accumulateur d'énergie en fonction de la température détectée du noyau de la cellule de l'accumulateur d'énergie,

- on mesure la température sur un pôle de la cellule et/ou une paroi de la cellule,
- on détecte la quantité de chaleur volumétrique en fonction de la résistance interne de la cellule, d'une intensité de courant mesurée et du volume de la cellule, et
- on détecte la température du noyau de la cellule dans une plage de fréquence.

2. Procédé conforme à la revendication 1, selon lequel on refroidit l'accumulateur d'énergie ou la cellule par l'intermédiaire de la paroi de la cellule et/ou d'au moins un pôle de la cellule.

3. Procédé conforme à la revendication 1 ou 2, selon lequel l'accumulateur d'énergie est un accumulateur d'énergie à haute puissance ou un accumulateur d'énergie élevée.

4. Procédé conforme à la revendication 3, selon lequel l'accumulateur d'énergie comprend plusieurs cellules.

5. Procédé conforme à l'une des revendications précédentes selon lequel la quantité de chaleur volumétrique q est déterminée conformément à la formule :

$$q = R_iI^2/V,$$

dans laquelle

$R_i$ représente la résistance interne,
I représente l'intensité de courant mesurée,
V représente le volume de la cellule.

6. Procédé conforme à l'une des revendications précédentes selon lequel la température du noyau de la cellule est déterminée dans la plage de fréquence selon la formule :

$$T_{Kern}(s) = \frac{k}{\tau \cdot s + 1} \cdot q(s) + \frac{1}{\tau \cdot s + 1} \cdot T_{mess}(s)$$

dans laquelle

s représente la fréquence,
$\tau$ représente une durée caractéristique,
k représente la résistance calorifique,
q représente la quantité de chaleur volumétrique,
$T_{Kern}$ représente la température de la cellule,
$T_{mess}$ représente la température au niveau de la position de la mesure.

7. Procédé conforme à l'une des revendications précédentes selon lequel la température du noyau de la cellule est déterminée à des instants n discrets de la façon suivante :

$$T_{Kern}(n) = (k \cdot q_n - T_{kern}(n-1)) \cdot \frac{\tau_s}{\tau} + T_{Kern}(n-1)$$

formule dans laquelle :

$\tau_s$ représente la fréquence de détection,
q représente la quantité de chaleur détectée,
$T_{Kern}$ représente la température du noyau de la cellule,
$\tau$ représente une durée caractéristique,
k représente la résistance calorifique.

8. Procédé permettant de déterminer la température du noyau d'une cellule d'un accumulateur d'énergie, ce dispositif comprenant une unité de traitement qui est réalisée de manière à permettre la mise en oeuvre du procédé conforme à l'une des revendications précédentes.

9. Dispositif conforme à la revendication 8, comprenant un système de refroidissement permettant de refroidir la cellule de l'accumulateur d'énergie par une paroi de la cellule et/ou au moins un pôle de la cellule.

10. Dispositif conforme à l'une des revendications 8 et 9, dans lequel l'accumulateur d'énergie est un accumulateur d'énergie de véhicule.

11. Dispositif conforme à la revendication 10, selon lequel l'accumulateur d'énergie est un accumulateur d'énergie d'un véhicule hybride ou d'un véhicule électrique.

12. Dispositif conforme à l'une des revendications 8 à 11, dans lequel la cellule de l'accumulateur d'énergie a une géométrie cylindrique, une géométrie prismatique ou une géométrie de pochette.

13. Véhicule comprenant un dispositif conforme à l'une des revendications 8 à 12.

Fig.1

# Fig.2

$q_n$ → [ Übertragungsfunktion ] → $T_{Kern}(n)$

201

EP 2 465 162 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008050536 A1

**In der Beschreibung aufgeführte Nicht-Patentliteratur**

- Thermal analysis of lithium polymer electrolyte batteries by a two dimensional model-thermal behaviour and design optimization. **CHEN Y. et al.** ELECTROCHIMICA ACTA. ELSEVIER SCIENCE PUBLISHERS, 01. Marz 1994, vol. 39, 517-526